# NEUE EUROPÄISCHE PATENTSCHRIFT

(11) **EP 0 579 909 B2**
(45) Veröffentlichungstag und Bekanntmachung des Hinweises auf die Entscheidung über den Einspruch: **28.03.2001**
(45) Hinweis auf die Patenterteilung: 26.06.1996
(21) Anmeldenummer: 93106948.8
(22) Anmeldetag: 29.04.1993
(51) Int. Cl.: A01C 5/06

(54) **Zweischeibensäschar mit Topfscheibe**
Pair of circular seeding disks with one leading concave disk
Couple de disques semeurs avec disque principal concave

(30) Priorität: 22.07.1992 DE 4224152
(43) Veröffentlichungstag der Anmeldung: 26.01.1994
(73) Patentinhaber: Kverneland Accord GmbH & Co. KG, 59494 Soest (DE)
(72) Erfinder: Stüttgen, Gerhard Franz Alfons, W-4775 Lippetal (DE); Falinski, Jürgen, W-4939 Steinheim (DE); Schwarte, Bernd, W-4724 Wadersloh 2 (DE)
(74) Vertreter: Becker, Thomas, Dr., Dipl.-Ing.

(56) Entgegenhaltungen:
- EP-A- 0 332 856
- EP-A- 0 401 593
- EP-B- 0 332 856
- DE-B- 2 921 183
- FR-A- 2 413 864
- US-A- 4 483 401
- US-A- 4 598 654
- US-A- 4 779 684

## Beschreibung

Die Erfindung betrifft ein Scheibensäschar. Ein Säschar ist aus der US-A-45 98 654 bekannt. Bei diesem bekannten Scheibensäschar ist nachteilig, daß in ungünstigen Fällen Erdteilchen an der Scheibeninnenseite ankleben, wodurch dann ein Blokkieren der Scheiben hervorgerufen werden kann. Durch anhaftende Pflanzenrückstände kann dieser Vorgang beschleunigt werden. Bei stehenden Scheiben wird weder eine genaue Tiefenablage des Saatgutes erreicht, noch ein einseitiger Verschleiß am Umfang der Scheibe verhindert.

Aus der US-PS 44 83 401 und aus der US-A-47 79 684 ist es bekannt, zwei drehbare und topfartig gebogene Scheiben zueinander gewölbt anzuordnen. Bei der Verwendung einer derartigen Vorrichtung als Säschar würden sehr hohe Widerstandskräfte im Boden auftreten, was bezüglich der erforderlichen Antriebsleistung und bezüglich der Arbeitsgeschwindigkeit nachteilig ist. Zudem würde eine sehr breite Furche erzielt werden, so daß sehr weite Furchenabstände eingehalten werden müßten. Auf diese Weise wird die effektive Bodennutzung stark eingeschränkt.

Aus der EP-A-0 401 593 ist ein Säschar bekannt, welches ein rotierendes Bauteil und ein feststehendes Bauteil aufweist. Der Widerstand des feststehenden Bauteils, welches durch die Erde gezogen werden muß und welches nicht an der Erde abrollt, ist im Vergleich zu einem rotierenden Bauteil höher.

Der Erfindung liegt die Aufgabe zugrunde, ein Scheibenschar mit zwei Scheiben, die jeweils winklig gegenüber der Vertikalen geneigt und zur Fahrtrichtung jeweils schräggestellt drehbar gelagert sind, zu schaffen, mit dem eine verstopfungsfreie Arbeit sowie eine gute und gleichmäßige Säleistung erzielt wird.

Diese der Erfindung zugrundeliegende Aufgabe wird durch die Ausbildung gemäß Anspruch 1 gelöst.

Die Hauptscheibe durchschneidet den Erdboden und teilt diesen wie ein Schiffsbug das Wasser, so daß Material entweder nach rechts oder nach links von der Hauptscheibe gedrängt wird und es dort zu keinem Materialstau kommen kann. Die zweite Scheibe greift in die geöffnete Furche ein und hält diese offen. Dabei greift die zweite Scheibe in den Innenraum der topfartig ausgebildeten Hauptscheibe ein. Auf diese Weise wird ausgeschlossen, daß Bodenanteile in die gerade geöffnete Furche geraten können, bevor das Saatgut eingebracht wurde. Das Saatgut kann daher die gewünschte Saatguttiefe problemlos erreichen und auf diese Weise eine hohe effektive Säleistung sicherstellen.

Da die zweite Scheibe aus einem flexiblen Werkstoff gefertigt ist, kann sie sehr nahe an die Hauptscheibe herangeführt werden und so das Eindringen von unerwünschten Erdklumpen od. dgl. in die Furche mit Sicherheit ausschließen. Sollte die Hauptscheibe im Betrieb deformiert werden, so kann die flexible Scheibe entsprechend nachgeben, so daß keine Funktionsstörungen die Folge sind. Die zweite Scheibe kann mit einer gewissen Vorspannung gegen die Hauptscheibe gepreßt werden, um eine schmalere Bauweise und eine größere Dichtfläche im Berührungsbereich zu erhalten.

Vorteilhafterweise werden die Lagerungen der beiden Scheiben auf der jeweiligen Innenseite angebracht, damit die Außenseiten eine glatte Oberfläche aufweisen, an der sich keine Pflanzenrückstände anhängen.

Dabei kann die Scharhalterung gleichzeitig als Zuführungsrohr für das Saatgut ausgebildet sein, so daß eine platzsparende Anordnung im Bereich zwischen den beiden Scharscheiben möglich ist. Auf diese Weise kann der Öffnungswinkel zwischen den beiden Scharscheiben gering gehalten werden. Es wird ein sicheres Ablegen des Saatgutes in der gewünschten Saatguttiefe ermöglicht und aufgrund des geringen Öffnungswinkels wird auch ein geringes Antriebsmoment für die Scharscheiben möglich.

Die Ausbildung der Hauptscheibe als Segment einer Hohlkugel ermöglicht eine weitere Verringerung des erforderlichen Antriebsmomentes. Bei der schräggestellten Topfscheibe bewirkt die plane Ausbildung der Scheibe, daß über einen relativ langen Weg die Scheibe im Winkel zur Fahrtrichtung steht und sich innerhalb des Bodens befindet. Dieses Maß ist für die Fahrtwiderstände von erheblicher Bedeutung. Bei einer kugelsegmentartigen Oberfläche der Hauptscheibe weicht die Hauptscheibe schon bald von dieser schrägen Ausrichtung gegenüber der Fahrtrichtung ab, wodurch das Ankleben von Erdteilchen an der Außenseite der Hauptscheibe reduziert wird und das erforderliche Antriebsmoment dadurch verringert wird, daß keine Erdteilchen mit nach oben in Drehrichtung der Scheibe gefördert werden müssen.

Eine Ausbildung mit im wesentlichen planer Fläche der Hauptscheibe, jedoch einem abgewinkelten schrägen Rand, ist als alternative Ausführungsform von Vorteil, wenn eine besondere Steifigkeit und gleichzeitig niedrige Herstellungskosten der Hauptscheibe erzielt werden sollen. Gleichzeitig ist bei dieser Ausbildung der Hauptscheibe von Vorteil, daß ebenso wie bei der Ausbildung als Hohlkugelsegment die Eindringtiefe der Hauptscheibe die effektive Furchentiefe bestimmt. Mit zunehmender Tiefe tritt ein wachsender Eindringwiderstand auf und es wird eine konstantere Tiefenführung bei wechselnden Bodenarten erreicht.

Als weitere alternative Ausbildungsform der Hauptscheibe kann jedoch auch ein außen umlaufender Kragen vorgesehen sein, der der Scheibe eine weiter erhöhte Stabilität verleiht. Zusätzlich zu der eigentlichen Furchentiefe muß jedoch noch die Tiefe des Kragens in den Boden eindringen, so daß hier ein erhöhter Schardruck erforderlich wird. Bei härteren Böden kann eine derartig steifere Scheibe jedoch vorteilhaft sein.

Die zweite Scheibe kann im einfachsten Fall als plane Scheibe ausgebildet sein. Ihr Durchmesser kann kleiner sein als der der Hauptscheibe, so daß die Herstellungskosten gering sind und weiterhin ein lediglich geringer Kontakt mit dem Erdboden durch die zweite Scheibe erfolgt und auf diese Weise wiederum Antriebsleistung eingespart wird.

In Abwandlung davon kann jedoch die zweite Scheibe auch gleichgroß oder sogar größer sein als die Hauptscheibe und von der planen Form abweichend verschiedene Gestaltungen, beispielsweise mit abgewinkelten Rändern, wie bei der Hauptscheibe, aufweisen.

Durch die Verstellbarkeit der Achse der zweiten Scheibe zur Achse der Hauptscheibe kann der Furchenöffnungswinkel vergrößert werden, und dadurch eine Saat in einem breiteren Band erreicht werden. Desweiteren kann die Lage der Berührungsstelle verändert werden, wodurch das Schneid- und Dichtverhalten verbessert werden kann.

Wenn das Zuführungsrohr für das Saatgut oberhalb der beiden Drehpunkte der beiden Scheiben geführt ist, mündet diese Saatgutzuführung im hinteren Teil zwischen den beiden Scharscheiben, wo diese sehr weit auseinanderstehen. Der Abstand der beiden Scharscheiben braucht daher lediglich so groß bemessen zu sein, daß die Mündung des Saatgutzuführungsrohres dort Platz findet. Auf diese Weise kann der Öffnungswinkel zwischen den beiden Scharscheiben äußerst gering bemessen werden, was wiederum eine Verringerung der erforderlichen Antriebsleistung bewirkt.

Wenn das Zuführungsrohr für das Saatgut vor seiner Mündung so über den Öffnungswinkel der beiden Scharscheiben geführt ist, daß die Öffnung ganz oder teilweise abgedeckt wird, wird die Funktionssicherheit gegen das Eindringen von Erdklumpen u. dgl. weiter erhöht, so daß es nicht zum Verklemmen oder zu einer Behinderung der Saatgutablage kommen kann.

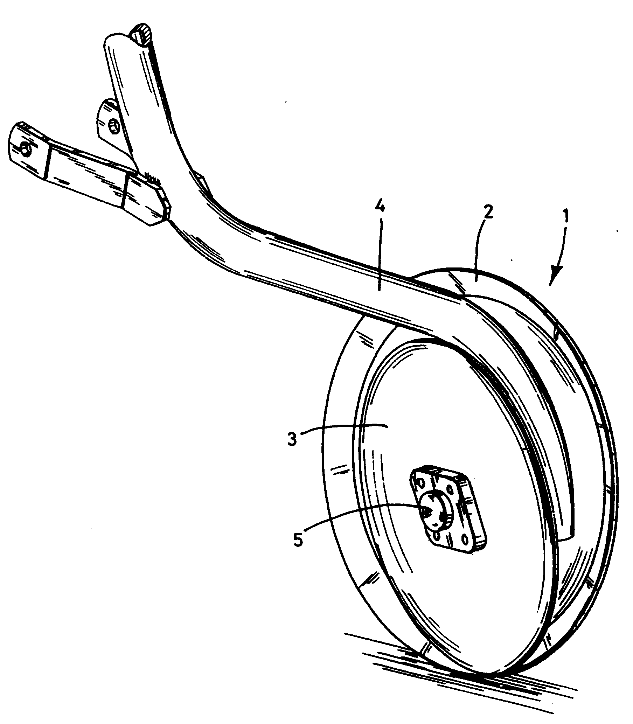

Ein Ausführungsbeispiel eines erfindungsgemäßen Scheibensäschars wird anhand der Zeichnung im folgenden näher erläutert.

Dabei ist mit 1 allgemein ein Zweischeibensäschar bezeichnet, welches im wesentlichen aus einer Hauptscheibe 2, einer zweiten Scheibe 3 sowie einer Scharhalterung als Zuführungsrohr 4 für das Saatgut besteht. Die Hauptscheibe 2 und die zweite Scheibe 3 sind dabei um Drehachsen 5 drehbar angeordnet, wobei die Scheiben winklig zueinander stehen und sowohl in Fahrtrichtung nach hinten als auch vom Boden nach oben öffnen.

In der Zeichnung ist die Drehachse mit 5 deutlich sichtbar gemacht. Vorteilhaft befinden sich jedoch auf den Außenseiten der Scheiben 2 und 3 keine sichtbaren Lagerungselemente, so daß keine nach außen vorstehenden Bauteile den Eindringwiderstand des Säschars unnötig erhöhen.

Die Hauptscheibe 2 schneidet in den Boden, öffnet diesen und bildet die Furche zur Aufnahme des Saatgutes auf. Die zweite Scheibe 3 greift in die geöffnete Furche und hält diese offen, bis das Saatgut aus dem Zuführungsrohr 4 in die Furche abgelegt ist.

Beim dargestellten Ausführungsbeispiel ist die Hauptscheibe 2 als plane Scheibe mit einem abgewinkelten Randbereich ausgebildet. Ein zusätzlicher, umlaufender Kragen, der parallel zur planen Hauptfläche der Hauptscheibe 2 verlaufen würde, könnte vorgesehen sein, um der Hauptscheibe 2 eine zusätzliche Steifigkeit, z. B. für den Einsatz in besonders harten Böden, zu geben. Als weitere Alternative könnte die Hauptscheibe 2 über ihren gesamten Durchmesser gebogen ausgebildet sein, beispielsweise in Form eines Hohlkugelsegmentes.

Die zweite Scheibe 3 ist im dargestellten Ausführungsbeispiel plan ausgebildet. Auch sie kann jedoch topfartig ausgebildet sein, falls dieses je nach dem verwendeten Einsatzgebiet aus Steifigkeitsgründen erforderlich sein sollte. Die zweite Scheibe 3 kann wie im dargestellten Ausführungsbeispiel kleiner sein als die Hauptscheibe 2. Sie kann jedoch auch gleichgroß oder größer sein und in allen Fällen wie im dargestellten Ausführungsbeispiel in den Hohlraum eintauchen, der durch die topfartige Ausbildung der Hauptscheibe 2 geschaffen wird.

Die zweite Scheibe 3 besteht aus einem flexiblen Material, so daß der Minimalabstand zwischen der Hauptscheibe 2 und der zweiten Scheibe 3 sehr gering gehalten werden kann. Auf diese Weise wird das Eindringen von Erdteilchen in den Innenraum zuverlässig verhindert. Dennoch sind Deformationen oder Fertigungstoleranzen für die Betriebssicherheit des Scheibenschars nicht nachteilig, da durch die Flexibilität der zweiten Scheibe 3 diese entsprechend nachgeben kann und ein Blockieren od. dgl. verhindert.

Vorteilhaft kann der Winkel der beiden Drehachsen 5 der beiden Scheiben 2 und 3 zueinander verstellbar ausgebildet sein. Auf diese Weise können die beiden Scheiben 2 und 3 in unterschiedlichen Winkeln zueinander angeordnet werden. Ebenso kann durch diese Verstellbarkeit der beiden Achsen zueinander die Lage der Berührungsstelle zwischen den beiden Scheiben 2 und 3 verändern. Auf einfachste Weise kann eine derartige Winkelverstellbarkeit gegeben werden, wenn lediglich eine der beiden Drehachsen verstellbar ausgebildet ist, die zweite jedoch als starre Drehachse ausgebildet ist.

Das Zuführungsrohr 4 verläuft von dem Anlenkpunkt des Schares an der Scharschiene zunächst oberhalb der zweiten Scheibe 3 und von der Drehachse 5. Erst im hinteren Bereich der beiden Scheiben 2 und 3 senkt sich das Zuführungsrohr ab und mündet dort oberhalb der Furche. Das Zuführungsrohr 4 verläuft also dort, wo die beiden im Raum winklig zueinanderstehenden Scheiben 2 und 3 ohnehin den größten Abstand aufweisen.

Dieser größte Abstand kann nun so schmal bemessen sein, daß er gerade zur Aufnahme des Zuführungsrohres 4 ausreicht. Der Winkel zwischen den beiden Scheiben 2 und 3 kann also erheblich kleiner sein, als wenn das Zuführungsrohr 4 schon im vorderen Bereich zwischen die beiden Scheiben geführt würde oder unterhalb der Drehachse 5 verlaufen würde. Durch diese schmale Anstellung der beiden Scheiben 2 und 3 zueinander wird ein geringerer Widerstand innerhalb des Bodens erreicht, so daß hierdurch die Anforderungen an die bereitzustellende Antriebsleistung ebenfalls gesenkt werden können.

Weiterhin bewirkt der Verlauf des Zuführungsrohres 4, daß der Öffnungswinkel zwischen den beiden Scheiben 2 und 3 von oben durch das Zuführungsrohr 4 im wesentlichen abgedeckt wird, so daß auch hier das Eindringen von Klumpen verhindert wird, die in dem Innenraum Verklemmungen verursachen und die Ablage des Saatgutes beeinflussen könnten.

## Patentansprüche

1. Scheibensäschar (1) mit einer Scharhalterung, an der zwei Scheiben (2, 3) jeweils so winklig gegenüber der Vertikalen geneigt und so zur Fahrtrichtung jeweils schräggestellt drehbar gelagert sind, dass die Scheiben (2,3) sowohl in Fahrtrichtung nach hinten als auch vom Boden nach oben öffnen wobei eine Hauptscheibe (2) zum Schneiden des Bodens, öffnen des Bodens und Bildung einer Furche zur Aufnahme von Saatgut als topfartige Scheibe ausgeführt ist und wobei in den Innenraum der Hauptscheibe (2) die zweite zum Eingriff in die geöffnete Furche und offentralten der Furche ausgebildete Scheibe (3) zumindest teilweise hineingreift und wobei die zweite Scheibe (3) aus einem flexiblen Werkstoff gefertigt ist, so daß die zweite Scheibe (3) nachgibt, wenn die Hauptscheibe (2) im Betrieb deformiert wird so daß keine Funktionsstörungen die Folge sind.

2. Scheibensäschar nach Anspruch 1, dadurch gekennzeichnet, daß die Scharhalterung als Zuführungsrohr (4) für das Saatgut ausgebildet ist.

3. Scheibensäschar nach Anspruch 1 oder 2, dadurch gekennzeichnet, daß die Hauptscheibe (2) als Segment einer Hohlkugel ausgebildet ist.

4. Scheibensäschar nach Anspruch 1 oder 2, dadurch gekennzeichnet, daß die Hauptscheibe (2) eine im wesentlichen plane Grundfläche und einen daran angeformten schrägen Rand aufweist.

5. Scheibensäschar nach einem der vorhergehenden Ansprüche, dadurch gekennzeichnet daß die Hauptscheibe (2) in ihrem Umfangsbereich einen kragenartigen vorgezogenen Randstreifen aufweist.

6. Scheibensäschar nach einem der vorhergehenden Ansprüche, dadurch gekennzeichnet daß die zweite Scheibe (2) als plane Scheibe ausgebildet ist.

7. Scheibensäschar nach einem der vorhergehenden Ansprüche, dadurch gekennzeichnet, daß das Zuführungsrohr (4) über den Öffnungswinkel der beiden Scheiben (2, 3) geführt ist und diese Öffnung ganz oder teilweise abdeckt.

8. Scheibensäschar nach einem der vorhergehenden Ansprüche, dadurch gekennzeichnet, daß die Drehachsen (5) der beiden Scheiben (2,3) vorzugsweise unterhalb des Zuführungsrohres (4) angeordnet sind.

9. Scheibensäschar nach einem der vorhergehenden Ansprüche, dadurch gekennzeichnet, daß die Achse der zweiten Scheibe (3) zur Achse der Hauptscheibe (2) verstellbar ausgebildet ist.

## Claims

1. A disk sowing plough (1) comprising a plough-share support on which are rotatably mounted two disks (2, 3) each such inclined at an angle with respect to the vertical and such positioned obliquely with respect to the direction of travel that the disks (2, 3) open in direction of travel backwards as well as from ground to the top, a main disk (2) for cutting the ground, opening of the ground and forming a furrow for introducing of seed being constructed as a cupshaped disk and the second disk (3), constructed for engagement into the opened furrow and for keeping the furrow open, engaging at least partially in the internal space of the main disk (2), and wherein the second disk (3) is made of a flexible material, such that the second disk (3) is deformed, if the main disk (2) is deformed during operation such that no functional disturbances result therefrom.

2. A disk sowing plough according to claim 1, characterized in that the plough-share support is constructed as a supply pipe (4) for the seed.

3. A disk sowing plough according to claim 1 or claim 2, characterized in that the main disk (2) is constructed as a segment of a hollow sphere.

4. A disk sowing plough according to claim 1 or claim 2, characterized in that the main disk (2) comprises a substantially flat base and a sloping rim formed thereon.

5. A disk sowing plough according to any one of the preceding claims, characterized in that, in its circumferential area, the main disk (2) comprises an edge strip drawn into the shape of a collar.

6. A disk sowing plough according to any one of the preceding claims, characterized in that the second disk (2) is constructed as a flat disk.

7. A disk sowing plough according to any one of the preceding claims, characterized in that the supply pipe (4) is guided over the aperture angle of the two disks (2, 3) and covers this aperture wholly or partially.

8. A disk sowing plough according to any one of the preceding claims, characterized in that the rotational shafts (5) of the two disks (2, 3) are preferably arranged below the supply pipe (4).

9. A disk sowing plough according to any one of the preceding claims, characterized in that the shaft of the second disk (3) is constructed adjustably with respect to the shaft of the main disk (2).

## Revendications

1. Disque semeur (1) pourvu d'une fixation de soc sur laquelle deux disques (2, 3) sont tels supportés en étant inclinés sous un certain angle par rapport à la verticale et également tels supportés avec possibilité de rotation dans une position oblique par rapport au sens de déplacement, que les disques (2, 3) s'ouvrent vers l'arriére dans le sens de la marche ainsi que vers le haut à partir du sol et dans lequel le disque principal (2) est réalisé pour couper du sol, ouvrir du sol et former un sillon pour l'introduction des semences, comme un disque concave et dans lequel le deuxième disque (3) construé pour pénétrer dans le sillon ouvert et le maintenir ouvert se met en prise au moins partiellement dans l'espace intérieur du disque principal (2), et dans lequel le deuxième disque (3) se compose d'un matériau flexible, de sorte que le deuxième disque (3) recule si le disque principal (2) est déformé pendant le fonctionnement, et qu'il ne s'ensuit aucune perturbation du fonctionnement.

2. Disque semeur selon la revendication 1, caractérisé en ce que la fixation du soc est conçue comme un tube d'alimentation (4) pour les semences.

3. Disque semeur selon la revendication 1 1 ou 2, caractérisé en ce que le disque principal (2) est conçu comme un segment d'une sphère creuse.

4. Disque semeur selon la revendication 1 ou 2, caractérisé en ce que le disque principal (2) présente une surface de base sensiblement plane et un bord oblique formé sur celle-ci.

5. Disque semeur selon l'une ou l'ensemble des revendications principales, caractérisé en ce que le disque principal (2) présente dans sa zone de circonférence une bande de bord étirée en forme de collier.

6. Disque semeur selon l'une ou l'ensemble des revendications principales, caractérisé en ce que le deuxième disque (2) est conçu comme un disque plan.

7. Disque semeur selon l'une ou l'ensemble des revendications principales, caractérisé en ce que le tube d'alimentation (4) passe par-dessus l'angle d'ouverture des deux disques (2, 3) et couvre entièrement ou partiellement l'ouverture.

8. Disque semeur selon l'une ou l'ensemble des revendications principales, caractérisé en ce que les axes de rotation (5) des deux disques (2, 3) sont de préférence disposés en-dessous du tube d'alimentation (4).

9. Disque semeur selon l'une ou l'ensemble des revendications principales, caractérisé en ce que l'axe du deuxième disque (3) peut être ajusté par rapport à l'axe du disque principal (2).
